(19) Europäisches Patentamt
European Patent Office
Office européen des brevets

(11) Publication number: 0 278 685
A2

(12) EUROPEAN PATENT APPLICATION

(21) Application number: 88300955.7

(51) Int. Cl.⁴: B32B 27/16

(22) Date of filing: 04.02.88

(30) Priority: 06.02.87 US 11835

(43) Date of publication of application:
17.08.88 Bulletin 88/33

(84) Designated Contracting States:
DE FR GB IT

(71) Applicant: THE STANDARD OIL COMPANY
200 Public Square, 36-F-3454
Cleveland Ohio 44114-2375(US)

(72) Inventor: Bartoszek-Loza, Rosemary
6570 Arbordale Avenue
Solon Ohio 44139(US)
Inventor: Butler, Richard J.
23951 Lakeshore Boulevard
Euclid Ohio 44123(US)

(74) Representative: Scott, Susan Margaret et al
BP INTERNATIONAL LIMITED Patents & Agreements Division Chertsey Road
Sunbury-on-Thames Middlesex TW16 7LN(GB)

(54) **Polymer laminates employing photocurable adhesives and process for bonding fluoropolymers to substrates.**

(57) Laminated products comprising a substrate, a fluoropolymer film and a photocurable adhesive which is bonded to the substrate provide protection of the substrate. A process for bonding fluoropolymers to substrates comprises the steps of coating at least one surface of a substrate with a first layer comprising an epoxy-based photocurable adhesive composition, imparting a surface treatment to a fluoropolymer film enabling the film to bond with the adhesive composition, applying a fluoropolymer film as a second layer over the first layer and, exposing the substrate and the first and second layers to radiant energy sufficient to cure the adhesive composition and bond it to the substrate and the fluoropolymer film.

EP 0 278 685 A2

# POLYMER LAMINATES EMPLOYING PHOTOCURABLE ADHESIVES AND PROCESS FOR BONDING FLUOROPOLYMERS TO SUBSTRATES

## TECHNICAL FIELD

The present invention relates to polymer laminates comprising various substrates, a fluoropolymer and a photocurable epoxy adhesive. The laminate exhibits excellent adhesion, very good hardness and good peel strength. Additionally, the polymer laminates provide barrier protection for the substrates such as chemical resistance which, in the instance of metal substrates, protects from corrosion. A process for bonding fluoropolymers to substrates is also provided wherein the photocurable epoxy adhesive is utilized to produce strong bonds between the fluoropolymerepoxy interfaces and epoxy-substrate interfaces.

## BACKGROUND ART

Polymer coatings over substrates have a variety of uses including protective, e.g., corrosion and weathering as well as insulative or decorative. Fluorocarbon polymers are particularly resistant to chemical attack, however, their properties also make them difficult to adhere to steel and other metal surfaces as protective coatings. These bonding difficulties have been minimized by etching the fluoropolymer film prior to application. One such patent employing this technique is No. 3,677,845. A fluorinated ethylene propylene polymer is chemically etched and is then applied to a substrate as a roll cover by heat shrinking.

Bonding of polymer laminates has traditionally been accomplished by using adhesives that are cured at ambient temperatures or are thermally cured. Of course, the desired polymer must not degrade at the cure temperature of the heat reactive adhesive. A useful class of adhesives includes the epoxy compositions. For reference purposes, a comprehensive disclosure of such epoxy compositions can be found in the text entitled Epoxy Resins, Chemistry and Technology, by A. May and Y. Tanaka, Marcel Deeker, Inc., New York (1973) and the article "Resins for Aerospace" by C.A. May, Applied Polymer Science, ACS Symposium Series 285, R.W. Teso and G.W. Poehlein, eds., American Chemical Society, p. 559 (1985).

Patents for the synthesis of cationic initiators and their use in photocuring epoxide resins include Nos. 3,981,897 and 4,026,705. U.S. Pat. No. 3,981,897 is directed toward a method for making diarylhalomium salts having utility as photoinitiators for epoxy resins. An exemplary species is 4,4'-dimethyldiphenyliodonium hexafluoroarsenate which cured 4-vinylcyclohexenedioxide upon exposure to a medium pressure mercury arc lamp for five seconds.

U.S. Pat. No. 4,026,705 provides a cationically polymerizable composition that is curable by visible light. It comprises a polymerizable cyclic compound, such as a cyclic ether, a aryliodonium salt as the photoinitiator and a cationic dye. An exemplary photoinitiator is diphenyliodonium tetrafluoroborate.

A heat curable composition is taught by U.S. Pat. No. 4,241,204 which provides cationically polymerizable resis with dialkylhydroxyarylsulfonium salts and certain organic oxidants. The components are mixed together with react exothermically, curing the resin.

Another method of forming the laminate is through the use of adhesive compositions which are cured chemically. U.S. Pat. No. 3,719,541 is directed toward a process for producing precoated metal to impart protection from corrosion. The process calls for laminating a film resin layer onto the metal through an intermediate layer of a radical curable composition. Upon irradiation of the product from an electron beam source, the intermediate layer is cured and becomes bonded to the metal and the resin. Among the resin film layers, fluoropolymers are disclosed; however, epoxy based adhesives are not employed.

U.S. Pat. No. 4,105,118 provides heat-sealable laminates comprising a metal foil and a thermoplastic polymeric film adhered together via an interlayer formed by radiation curing of acrylated epoxy resin. Representative thermoplastics include polyolefins, polyvinyl chloride and vinyl chloride copolymers but no fluoropolymers.

The foregoing patents have failed to suggest the use of photocurable adhesives and polymer laminate products of substrates, particularly metal, and fluoropolymers joined together therewith.

## DISCLOSURE OF THE INVENTION

In its broad aspects the present invention provides a laminated product comprising a substrate, a fluoropolymer film and a photocurable epoxy adhesive which is bonded to the substrate and the fluoropolymer film.

It is another broad aspect of the present invention to provide a process for bonding fluoropolymers to substrates which comprises the steps of coating at least one surface of a substrate with a first layer comprising a photocurable epoxy adhesive composition, imparting a surface treatment to the fluoroelastomer film enabling it to form a bond with the adhesive composition, applying the fluoropolymer film as a second layer over the first layer and, exposing the substrate and the first and second layers to radiant energy sufficient to cure the adhesive composition and bond it to the substrate and the fluoropolymer film.

More particularly the present invention provides a laminated product comprising: a substrate selected from the group consisting of metals, naturally occurring materials, glass, fiberglass, fiber reinforced plastics, non-reinforced plastics and elastomers; a fluoropolymer film wherein said fluoropolymer film is selected from the group consisting of homopolymers and copolymers of polyolefins that are at least partially fluorinated; and an epoxy based photocurable adhexive wherein the epoxy based photocurable adhesive consists essentially of an epoxy compound and wherein the epoxy based photocurable adhesive is bonded to said substrate and said fluoropolymer film.

The present invention further provides a process for bonding fluoropolymers to substrates wherein said substrate is selected from the group consisting of metals, naturally occurring materials, glass, fiberglass, fiber reinforced plastics, non-reinforced plastics and elastomers and wherein said process comprises the steps of: a) coating at least one surface of a substrate with a first layer comprising an epoxy based photocurable adhesive composition wherein said epoxy based photocurable adhesive consists essentially of an epoxy compound; b) imparting a surface treatment to a fluoropolymer film wherein said fluoropolymer film is selected from the group consisting of homopolymers and copolymers of polyolefins that are at least partially fluorinated and enabling said film to form a bond with said adhesive composition; c) applying said fluoropolymer film as a second layer over said first layer; and d) exposing said substrate and first and second layers to radiant energy wherein said radiant energy has a wavelength in the range from about 2,200 Angstroms to about 14,000 Angstroms and is sufficient to cure said adhesive composition and bond it to said substrate and said fluoropolymer film.

These and other objects, together with the advantages thereof over the prior art, which shall become apparent from the specification which follows, are accomplished by the invention as hereinafter described and claimed.

## PREFERRED MODE FOR CARRYING OUT THE INVENTION

The laminate product of the present invention employs a fluoropolymer film as a coating to various substrates particularly flat surfaces and metals such as steel. Bonding of the fluoropolymer film to metal substrates has utility in roll cover applications, such as used in the pulp and paper making industries where the fluoropolymer serves as a release film. Other uses include as protective coatings in tank cars and the inside of pipes and as coatings for wire. It is to be understood that these represent exemplary uses only and that the coating may be applied to a wide variety of products and different shapes. Moreover, the substrates are not limited to metals but can also include wood, metal, reinforced and unreinforced plastics, rubber and the like.

Typical fluorocarbon polymers include but are not limited to homologues and derivatives of polytetrafluoroethylene, commercially available as Teflon; FEP, a fluorinated ethylene propylene which is a copolymer of tetrafluoroethylene and hexafluoropropylene; Teflon TFE, tetrafluoroethylene; Teflon PFA, perfluoroalkoxy resin; Tefzel, a modified copolymer of ethylene and tetrafluoroethylene, and the like. More preferred is fluorinated ethylene propylene. Teflon and Tefzel are registered trademarks for tetrafluoroethylene and polyethylenetetrafluoroethylene, respectively.

The film is prepared by conventional techniques such as solvent casting and can have a thickness of from about 2.5 to 625 microns. Film preparation is well known in the art and should not constitute a limitation of the present invention.

Prior to application of the fluoropolymer film according to the process of the present invention, the surface of the film that will be in contact with the adhesive composition must receive a treatment that will enable it to form a bond with the adhesive composition. It is necessary to do so because one of the

properties of fluoropolymer films that make them useful is that almost no substance, including the adhesives, will adhere to their surface. While this property provides barrier protection to the substrate, it must be overcome over the areas that will be in contact with the adhesive.

Accordingly, the surface can be treated by etching. One type of etching is chemical and is conducted with sodium naphthalide solution. This process being generally known in the art, it need not be described herein. Another type is water plasma etching a process which is essentially the exposure of the fluoropolymer film to a plasma. There are many different setups which can be selected for such etching and each could result in a different but nevertheless useful surface. A good source for plasma processing techniques can be found in the text entitled Deposition Technologies for Films and Coatings -Developments and Applications, R.F. Bunshah et al., Noyes Publications (1982), the subject matter of which is incorporated herein by reference. It is to be understood that practice of the present invention shall not be limited to plasma etching or any particular technique thereof so long as the result imparts a surface to fluoropolymer film to which the epoxy based adhesive will adhere.

It is to be understood that the particular manner of etching or other method of surface treatment does not constitute a limitation of the present invention.

The intermediate layer that bonds with and between the metal substrate and the fluoropolymer comprises an epoxy-based adhesive. Epoxy resins are characterized by the presence of a three-membered cyclic ether group commonly referred to as an epoxy group which is represented as follows:

I

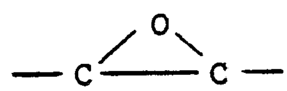

There are two commonly used classed of epoxy resins, diglycidyl ethers of bisphenol A and Novolak epoxy resins. Molecular weight and epoxide equivalent are controlled by varying the reactant ratios.

The conventional epoxy resins are diglycidyl ethers of bisphenol A derived from bisphenol A (4,4-isopropylidenediphenol) and epichlorohydrin. The reaction product is believed to have the form of a polyglycidyl ether of bisphenol A (the glycidyl group being more formally referred to as the 2,3-epoxypropyl group) and thus may be thought of as a polyether derived from the diphenol and glycidyl (2,3-epoxy-l-propanol). The structure usually assigned to the resinous product is

II

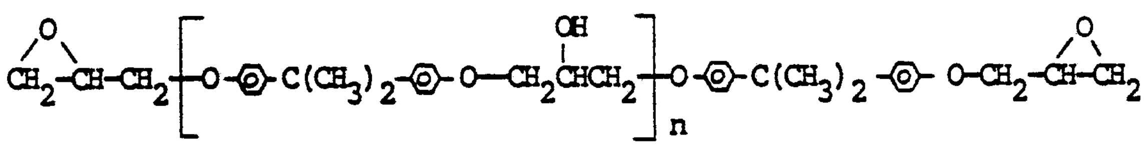

A viscous liquid epoxy resin, average molecular weight about 380, is obtained by reacting the epichlorohydrin in high molecular proportion relative to the bisphenol A, the reaction product containing well over 85 mole percent of the monomeric diglycidyl ether of bisphenol A (represented in formula II, where n = 0), which may be named 2,2-bis(p-(2,3-epoxypropoxy)phenyl)propane, and smaller proportions of units in which n is an integer equal to 1, 2, 3, etc. This product exemplifies epoxide monomers and prepolymers, having a moderate molecular weight, preferably of the order of 1,000 or less, which may be crosslinked or otherwise polymerized in accordance with the invention. A particularly suitable product is available as the Epon resins manufactured by Shell Oil Co.

Solid diglycidyl ethers of bisphenol A are also useful epoxy resins for the instant invention. The structure is the same as above, in formula II, except the average value of n ranges from 1 to 20. High molecular weight diglycidyl ethers of bisphenol A are also useful for the instant invention. The molecular weight of the product is a function of the ratio of epichlorohydrin-bisphenol A. The average value of n ranges from 1 to 20 and as the n value becomes greater, the molecular weight of the resin increases.

The novolak epoxy resins are obtained by the known reaction of epichlorohydrin with a novolak resin. First, a phenol-formaldehyde type resin is obtained primarily by the use of acid catalysts and an excess of phenol. The epoxy phenol-novolak resins are then prepared from the phenol-formaldehyde condensation products with subsequent epoxidation, utilizing epichlorohydrin. The structure usually assigned this resinous

structure is

III

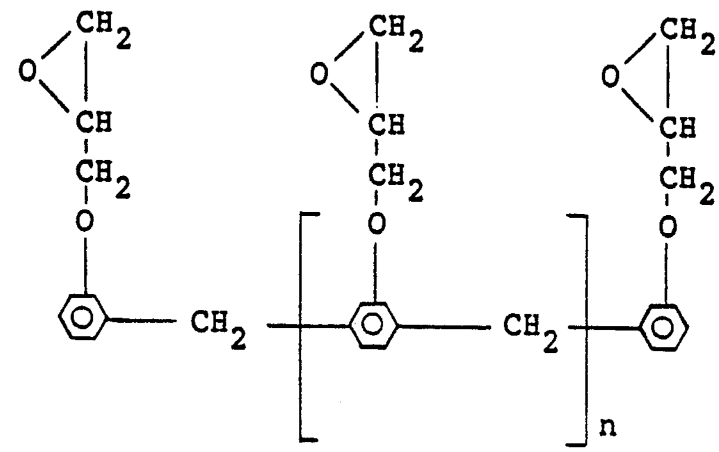

The epoxy novolak resin can range from a high viscosity liquid (where the value of n in formula III averages about 0.2) to a solid (where the value of n in formula III is greater than 3).

Many other epoxide materials are available in polymerizable monomeric or prepolymeric forms. Typical epoxide or polyepoxide materials include but are not limited to cyclohexene oxides, epoxidized cycloalkenes, glycidyl esters of acrylic acid, glycidyl alkyl ethers, glycidyl aryl ethers, esters of epoxidized cyclic acids, halogenated epoxides, styrene oxide, bisphenol A epoxides and the like.

The cyclohexene oxides and their derivatives and homologues useful as epoxide materials include but are not limited to cyclohexene oxide, 1,2-epoxycyclohexene, vinylcyclohexene dioxide, more specifically names 3-(epoxyethyl)-7-oxabicyclo (4.1.0) heptane, and 1,2-epoxy-4-(epoxyethyl)-cyclohexane. Most preferred is cyclohexene oxide.

The epoxidized cycloalkenes and their derivatives and homologues useful as epoxide materials include but are not limited to the derivatives of ethylene oxide, propylene oxide, trimethylene oxide, 3,3-bis-(chloromethyl)-oxetane, tetrahydrofuran, dicyclopentadiene dioxide, 1,2,5-trioxane, 2,3 epoxybutane, polycyclic diepoxide and 3,4-8,9-diepoxy tricyclo-[5.2.1.$0^{2,4}$]-decane. Most preferred is polycyclic diepoxide.

The glycidyl esters of acrylic acid and their derivatives and homologues include but are not limited to the glycidyl derivatives of methacrylic acid, acrylonitrile, crotonic acid, allylglycidyl ether, 1-allyloxyl-2,3-epoxypropane, glycidyl phenyl ether and 1,2-epoxy-3-phenoxy-propane, More preferred are epoxidized methacrylic acid and acrylonitrile.

The glycidyl alkylethers and their derivatives and homologues include but are not limited to glycidyl octyl ether, decyl glycidyl ether, dodecyl glycidyl ether and glycidyl tetradecyl ether. Most preferred is glycidyl octyl ether.

The glycidyl aryl ethers and their derivatives and homologues include but are not limited to benzyl glycidyl ether, methyl benzyl glycidyl ether, dimethyl benzyl glycidyl ether, ethyl glycidyl ether. Most preferred is benzyl glycidyl ether.

Esters of epoxidized cyclic alcohols or of epoxidized cycloalkanecarboxylic acids or of both and their derivatives and homologues include but not not limited to esters of epoxidized cyclohexanemethanol and epoxidized cyclohexane-carboxylic acid such as diepoxide (3,4)-epoxycyclohexyl)methyl 3,4-epoxycyclohexane-carboxylate, esters of a substituted (epoxycycloalkyl) methanol and a dibasic acid such as a bis(3,4-epoxy--6-methylcyclohexyl)-methyl) adipate. Diepoxide monomeric materials may be obtained conveniently as bis(epoxyalkyl) ethers of glycols, an example being the diglycidyl ether of 1,4-butanediol, that is, 1,4-bis-(2,3-epoxypropoxy)butane. This diepoxide is related to the digylcidyl ether of bisphenol A, that is 2,2-bis-[p-(2,3-epoxypropoxy)-phenyl] propane.

Reactive diluents and their derivatives and homologues likewise may be used such as 1,2 epoxy dodecane and the like.

To effect crosslinking of the epoxy resin, a curative is required. Unlike some systems which require heat, or acid catalysts which initiate an exothermic reaction, the present invention employs an initiator which generates a Lewis acid type catalytic curing agent upon exposure to light. The photoinitiated curing agents and the curing conditions thereof are generally well known in the art. Exemplary photoinitiated curing agents that are suitable for practice of the present invention include primarily, photocationic compounds such as triaryl sulfonium salts. Certain dye sensitizers can also be employed which will change the wavelength of the available light to a range that will activate the cure. Amounts added range generally from about 0.5 to

six weight percent of the adhesive composition; more particularly to a range of from about one to five weight percent and preferably to a range of from about two to four weight percent.

Other photoinitiated curing agents include benzophenone and its derivatives, benzoin ethers and their derivatives, substituted acetophenone, Michler's ketone, benzil and the like. These generate free radicals and are preferably used only with adhesive compositions that contain unsaturation. A hybrid composition such as an epoxyacrylate adhesive would respond to such a curing agent. Because the adhesive composition can include epoxy formulations as well as hybrids containing unsaturation, the designation epoxy-based photocurable adhesive has been employed herein.

Particularly suitable curatives are cationic photoinitiators commercially available from 3M under the name FX-512 and from Union Carbide under the names UVI-6990, UVI-6974 and UVI-6790. These curatives are proprietary compositions of the two companies named.

The coating composition is cured by radiation in the range of ultraviolet to visible light. The source of irradiation may be solar or an artificial light. The light source preferably includes wavelengths in the range of from about 2200 to about 14000 Angstroms. Optimally, the light source for irradiation photocationic initiators includes light having a substantial irradiation spectrum in the range from about 2200 to about 4000 Angstroms. The systems used to generate radiant energy for the photoinitiated cure can be any known in the art such as low pressure, medium pressure, high pressure or super high pressure mercury lamps; mercury, carbon and plasma arc lamps; xenon lamps; UV light emitting diodes; UV emitting lasers and the like. The coating mixture can also be cured by tungsten lamps, sunlight and the like as well as with an electron beam apparatus to generate free radicals for the initiation of adhesives that contain unsaturation.

Suitable substrate metals include cold-rolled steel, low carbon steel, phosphated steel, galvanized steel, aluminum and the like. Where the metal does not carry a conversion coating, then it may be sandblasted clean. As noted hereinabove, the substrate can provide a variety of surfaces including those presented by sheets, rods, tubes, wire and the like. In addition to metal, various other substrates can be employed including wood, paper, plastic, rubber and the like. Plastics include unreinforced materials, such as the polycarbonates, as well as fiber reinforced plastics (FRP). Exemplary FPS include polyester and epoxy matrices that are reinforced with fibers of glass, boron, carbon, or aramid and the like. Laminated products employing FRPs can be used in a variety of applications such as space and land vehicles, aricraft, marine vessels, sporting goods and medical.

Practice of the process of the present invention provides the steps of applying to one surface of the substrate an epoxy-based photocurable adhesive, imparting a surface treatment to the fluoropolymer film enabling the film to form a bond with the adhesive composition and then applying the fluoropolymer film thereover. For the first step, a relatively uniform film of the epoxy adhesive composition described hereinabove is applied onto the substrate by any of the known means such as wire wound rod, Gardco wet film applicator rods, knife, bar, airless spraying, dipping, roller coating, flowing, brushing, conventional and/or electrostatic spray gun, electro-deposition and the like. Generally, the adhesive composition is applied in an amount sufficient to provide a dry cured thickness of from about 2.5 microns to about 625 microns and preferably from about 2.5 microns to about 250 microns.

Application of the surface treated fluoropolymer film to the epoxy based adhesive is performed by applying the film directly thereto with suitable apparatus adapted to position and apply the film to the specific substrate. A step of heat shrinking may be desirable where the film must conform to different surfaces of the substrate. In the laboratory work reported hereinbelow, the fluoropolymer sheet was placed over the substrate and adhesive with pressure, to insure complete application, and then subjected to radiant energy as discussed hereinbelow. Pressure application is not necessary to the process of the present invention but may be an expedient to the step of applying.

The last step of the process is activating the curative by exposing the uncured laminated product to a source of light energy sufficient to effect the cure of the epoxy adhesive. In the instance where a continuous sheet of cold rolled steel is the substrate, exposure can be easily effected by conveying the steel under a light source positioned thereabove.

## Specific Examples

In order to demonstrate the process and advantages of the present invention, six photocurable adhesive formulations were prepared with Epon 828 epoxy resin (Shell), D.E.N. 431 and D.E.N. 444 epoxy-novolaks (DOW), FX-512 cationic photoinitiator (3M), UVI-6974 and UVI-6990 cationic photoinitiators (Union Carbide). These six, designated Compositions A-G, were prepared having the compositions presented in Table I, all amounts specified in grams.

TABLE I

Adhesive Formulations

| Composition | A | B | C | D | E | F | G |
|---|---|---|---|---|---|---|---|
| Epon 828 | 20.00 | 15.0 | 10.0 | 5.0 | 0.0 | 20.0 | 20.0 |
| D.E.N. 431 | 0.0 | 5.0 | 10.0 | 15.0 | 20.0 | 0.0 | 0.0 |
| FX-512 | 0.6 | 0.6 | 0.6 | 0.6 | 0.6 | 0.0 | 0.0 |
| UVI-6974 | 0.0 | 0.0 | 0.0 | 0.0 | 0.0 | 0.6 | 0.0 |
| UVI-6990 | 0.0 | 0.0 | 0.0 | 0.0 | 0.0 | 0.0 | 0.6 |

These compositions were then applied to various steel panels 6" x 4" (15 x 10 cm) which included Bonderite 40 (B40) coated steel; smooth finish (Q-D) or matte finish (Q-R) panels from Q Panel Co. and sandblasted steel (SBS) KTA-Tator, Inc. using Gardco wet film application rods. The adhesives were cured using a Salisbury Finishing Engineering Model #UVCC-5M Conveyor System in two passes at 5 M/min with 200 Watt/in lamps. The material was passed along a conveyor beneath the light source.

The formulated compositions were examined as coatings to check for adhesion and hardness, and then examined as adhesives for the laminates. The adhesion test (ASTM D 3359-78) was carried out by applying a strip of Scotch Brand No. 670 tape (3M) to a cross cut section previously made by a sharp tool in the coated substrate. The tape was then removed and the percent adhesion of the coating remaining on the substrate was assessed on a 0-100 scale (0 = no adhesion, 100 = total adhesion). The hardness test (ASTM D 3363-74) was carried out by forcing pencil leads of increasing hardness against the coated surface in a defined manner until a pencil lead marks the surface. Coating hardness is defined by the hardest lead which just fails to mark the coating. Test ranges are from 2B (softest coating) to HB (moderate) to 8H (hardest coating)>

Adhesion and hardness tests for the adhesives provided in Table I are reported in Table II.

TABLE II

Coating Adhesion and Hardness Test Results

| Substrate | Composition | Adhesion | Hardness |
|---|---|---|---|
| B40 | A | 100% | 6H |
| B40 | F | 60% | 6H |
| B40 | G | 100% | 8H |
| Q-R | A | 100% | 6H |
| Q-D | A | 0% | 4H |
| SBS | A | 100% | 8H |
| SBS | B | 100% | 8H |
| SBS | C | 100% | 8H |
| SBS | D | 100% | 8H |
| SBS | E | 100% | 8H |

Having established the adhesion between the photocurable adhesive and the substrate, next several laminated products were prepared utilizing various photocurable epoxy adhesive compositions and fluorinated polyethylenepropylene film. The materials and specific procedure were as follows:

The photocurable adhesive compositions were again Epon, D.E.N. 431 and FX-512. The substrates

employed included Bonderite 40, a zinc phosphated cold rolled steel and low carbon steel test panels sandblasted to a NACE #1 white metal finish. Sodium naphthalide etched fluorinated ethylene-propylene (FEP) copolymer was employed as the fluoropolymer film.

Adhesive formulations were prepared in 10 to 50 gram amounts in disposable polypropylene beakers. For example, 7.5 g Epon 828 epoxy resin and 2.5 g DEN 431 resin were added to a beaker, followed by 0.30 g FX-512 initiator. The formulations were wrapped in aluminum foil and stored at room temperature for at least one hour before use. The adhesives were applied to the metal substrates using Gardco wet film applications. Samples of FEP were cut to the appropriate size and placed on the adhesive. Excess adhesive was removed by pushing a draw bar across the top of the FEP. The adhesives were cured using the aforementioned Salisbury Finishing Engineering Model #UVCC-5M Conveyor System.

Laminates of FEP/Adhesive/Metal were tested using T-peel measurements, ASTM method D 1876-72 (1978). All T-peel tests were performed independently. An Instron Mechanical Tester with appropriate mechanical jaws was used for the T-peel. The tests were performed, using a peel rate of 25.4/min. Samples were tested at room temperature (RT) and after exposure to temperatures of 126° C, 149° C, 171° C and 204° C for periods of 18 and 64 hours. T-peel strength is defined as the force required to separate the layers in a laminate structure. For the laminates reported in the Tables, T-peel strength refers to the force required to pull the FEP layer off the metal substrate. Data was again recorded in units of kolograms per linear centimeter, Kg/cm.

Seventeen adhesive compositions designated G-W were prepared and have been presented in Tables III, V and VII, all amounts specified are in grams.

Table III presents the composition of a series of adhesives G-K used in the preparation of FEP laminates onto Bonderite-40 coated steel substrates. The laminates were cured using two passes at 5 M/min with 200 Watt/in lamps on the Salisbury Conveyor System. Table IV provides the results of T-peel adhesion tests conducted on Example Nos. 1 to 5 at room temperature and also following aging at elevated temperatures for 18 and 64 hours (H). Units reported are Kg/linear cm.

## TABLE III

## Adhesive Compositions G-K

| Component | G | H | I | J | K |
|---|---|---|---|---|---|
| Epon 828 | 29.98 | 15.95 | 15.10 | 5.05 | - |
| DEN 431 | - | 5.46 | 15.18 | 15.46 | 20.24 |
| FX-512 | 0.98 | 0.66 | 0.95 | 0.66 | 0.64 |
| Wt% FX-512 | 3.17 | 3.00 | 3.05 | 3.10 | 3.07 |

TABLE IV

T-Peel Data for Laminates Prepared on B-40 Substrates

| Ex. No. | Adhesive | RT | 126°C 18H | 126°C 64H | 149°C 18H | 149°C 64H | 171°C 18H | 171°C 64H | 204°C 18H |
|---|---|---|---|---|---|---|---|---|---|
| 1 | G | 3.8 | 4.3 | 3.8 | 7.0 | 3.9 | 3.3 | 3.6 | 3.2 |
| | | 2.5 | 3.6 | 2.5 | - | 2.9 | 2.7 | 3.2 | 1.6 |
| | | 0.9 | 2.1 | 1.1 | - | 1.4 | 1.8 | 2.9 | 1.8 |
| 2 | H | 3.9 | 4.1 | 4.1 | 4.2 | 3.9 | 3.6 | 3.6 | 3.3 |
| | | 3.6 | 3.6 | 3.9 | 3.6 | 3.6 | 2.9 | 1.8 | 2.1 |
| | | 2.7 | 3.0 | 3.0 | 2.9 | 2.9 | 2.0 | 0.0 | 1.2 |
| 3 | I | 3.4 | 4.3[a] | 3.8 | 3.8 | 3.8 | 3.6 | 2.4 | 3.3 |
| | | 2.1 | - | 2.5 | 1.8 | 3.6 | 3.4 | 1.1 | 2.5 |
| | | 1.1 | - | 0.9 | 0.0 | 3.2 | 3.2 | 0.0 | 1.8 |
| 4 | J | 3.8 | 3.8 | 3.9 | 3.9 | 3.6 | 2.5 | 3.5 | 2.3 |
| | | 2.1 | 2.5 | 3.6 | 2.1 | 3.2 | 1.8 | 2.5 | 2.0 |
| | | 1.1 | 1.4 | 3.2 | 1.8 | 3.0 | 1.1 | 1.8 | 1.4 |
| 5 | K | 3.9 | 2.7[a] | 4.0 | 2.5 | 3.3 | 2.6 | 2.9 | 3.3 |
| | | 3.2 | - | 3.6 | 1.8 | 2.9 | 1.6 | 2.0 | 2.7 |
| | | 2.3 | - | 2.5 | 1.1 | 2.1 | 0.4 | 1.1 | 2.0 |

a) Exceeded yield point of FEP; FEP torn during T-peel test.

Table V presents the composition of the next series of adhesives L-P which were used in the preparation of FEP laminates onto sandblasted steel substrates (SBS). These laminates were also cured using two passes at 5 M/min with 200 Watt/in lamps. Table VI provides the results in Kg/linear cm of T-peel adhesion tests conducted on Example Nos. 6 to 10 at room temperature and also following aging at elevated temperatures for 18 and 64 hours.

TABLE V

Adhesive Compositions L-P

| Component | L | M | N | O | P |
|---|---|---|---|---|---|
| Epon 828 | 30.20 | 22.50 | 15.08 | 7.85 | - |
| DEN 431 | - | 7.70 | 15.17 | 22.75 | 30.09 |
| FX-512 | 0.95 | 0.95 | 0.93 | 0.97 | 0.97 |
| Wt% FX-512 | 3.05 | 3.05 | 2.99 | 3.06 | 3.14 |

TABLE VI

T-Peel Data for Laminates Prepared on SBS Substrates

| Ex. | | RT | 126°C | | 149°C | | 171°C | | 204°C |
|---|---|---|---|---|---|---|---|---|---|
| No. | Adhesive | | 18H | 64H | 18H | 64H | 18H | 64H | 18H |
| 6 | L | 3.2 | 2.8 | 2.1 | 0.2[a] | 2.3 | 2.7 | 2.7 | 2.6 |
| | | 2.6 | 2.4 | 1.8 | 0.1[a] | 1.9 | 2.1 | 2.2 | 2.3 |
| | | 1.9 | 2.2 | 1.1 | 0.0 | 0.9 | 0.9 | 1.8 | 1.6 |
| 7 | M | 0.9 | 3.4 | 4.3 | 4.0 | 4.0 | 3.7 | 3.3 | 3.5 |
| | | 0.5 | 2.0 | 3.9 | 3.7 | 3.6 | 3.6 | 2.8 | 3.3 |
| | | 0.0 | 1.1 | 2.7 | 3.2 | 3.3 | 3.3 | 1.6 | 2.7 |
| 8 | N | 4.5 | 4.4 | 4.4 | 4.5 | 4.1 | 3.9 | 3.4 | 3.3 |
| | | 3.7 | 3.8 | 4.1 | 3.9 | 3.8 | 3.7 | 3.1 | 3.1 |
| | | 2.5 | 2.9 | 3.9 | 3.7 | 3.4 | 3.4 | 2.1 | 3.0 |
| 9 | O | 2.6 | 4.6 | 4.5 | 4.7 | 4.1 | 4.2 | 3.8 | 3.6 |
| | | 1.3 | 4.2 | 4.3 | 4.0 | 4.0 | 3.2 | 3.5 | 3.2 |
| | | 0.4 | 3.8 | 4.1 | 2.5 | 3.9 | 1.1 | 3.2 | 3.0 |
| 10 | P | 5.1 | 4.7 | 4.6 | 4.3 | 4.7 | 4.4 | 3.9 | 3.7 |
| | | 4.6 | 4.3 | 4.3 | 3.9 | 4.0 | 3.7 | 3.5 | 3.5 |
| | | 3.4 | 3.8 | 4.2 | 3.2 | 3.4 | 3.4 | 3.2 | 3.1 |

a) Large delaminated areas present after photocure of laminate.

Table VII presents the composition of a third series of adhesives R-W used on the preparation of six more FEP laminates. The effect of photoinitiator concentration on the performance of the adhesive was examined by varying the FX-512 compound over the range of 1 to 6 weight percent in neat Epon 828. Example Nos. 11 to 16 were cured using two passes at 5 M/min with 200 Watt/in lamps. Table VIII provides the results of T-peel adhesive tests in Kg/linear cm conducted on the laminates at room temperature and also following aging at elevated temperatures for 18 and 64 hours.

TABLE VII

Adhesive Compositions R-W

| Component | R | S | T | U | V | W |
|---|---|---|---|---|---|---|
| Epon 828 | 10.09 | 10.09 | 10.10 | 10.18 | 10.20 | 10.16 |
| FX-512 | 0.14 | 0.21 | 0.33 | 0.43 | 0.52 | 0.64 |
| Wt% FX-512 | 1.42 | 2.05 | 3.17 | 4.07 | 4.86 | 5.96 |

TABLE VIII

T-Peel Data for Laminates Prepared Using Adhesive with Varying Amounts of FX-512 Photoinitiator on B-40 Substrates

| Ex. | | RT | 126°C | | 149°C | | 171°C | | 204°C |
|---|---|---|---|---|---|---|---|---|---|
| No. | Adhesive | | 18H | 64H | 18H | 64H | 18H | 64H | 18H |
| 11 | R | 1.5 | 2.3 | 1.0 | 0.8 | 0.9 | 1.5 | 3.3 | 3.6 |
| | | 0.7 | 1.4 | 0.7 | 0.4 | 0.6 | 0.7 | 2.9 | 2.1 |
| | | 0.5 | 0.7 | 0.4 | 0.2 | 0.4 | 0.4 | 2.4 | 0.7 |
| 12 | S | 3.3 | 2.8 | 4.0 | 3.6 | 3.2 | 2.8 | 3.0 | 3.5 |
| | | 1.8 | 2.9 | 3.2 | 2.5 | 1.8 | 1.8 | 2.1 | 2.9 |
| | | 0.4 | 1.3 | 1.4 | 0.5 | 0.7 | 0.4 | 1.4 | 2.3 |
| 13 | T | 3.8 | 4.3 | 3.8 | 3.9 | 3.9 | 3.3 | 3.6 | 3.2 |
| | | 2.5 | 3.6 | 2.5 | 2.1 | 2.9 | 2.7 | 3.2 | 1.6 |
| | | 0.9 | 2.1 | 1.2 | 0.7 | 1.4 | 1.8 | 2.9 | 0.0 |
| 14 | U | 3.9 | 3.3 | 4.3 | 4.0 | 3.5 | 5.4 | 3.3 | 3.5 |
| | | 2.9 | 2.9 | 3.9 | 3.6 | 2.2 | 3.2 | 1.1 | 3.2 |
| | | 1.1 | 2.5 | 2.9 | 2.5 | 0.2 | 2.5 | 0.0 | 3.0 |
| 15 | V | 3.6 | 4.1 | 4.3 | 3.9 | 3.9 | 3.6 | 3.0 | 3.2 |
| | | 2.5 | 3.6 | 3.6 | 3.6 | 3.6 | 3.2 | 2.0 | 2.1 |
| | | 1.1 | 3.2 | 2.9 | 3.2 | 3.4 | 2.9 | 0.7 | 1.1 |
| 16 | W | 3.7 | 4.0 | 3.9 | 3.9 | 4.0 | 3.7 | 1.8 | 3.3 |
| | | 2.9 | 3.6 | 3.3 | 3.6 | 2.1 | 1.8 | 0.9 | 2.5 |
| | | 2.0 | 2.9 | 2.3 | 3.2 | 0.2 | 0.0 | 0.0 | 1.1 |

Finally, in order to demonstrate the effect of the process of the present invention with non-metal substrates, samples of ethylene-propylene-diene monomer (EPDM); Hypalon (chlorosulfonated polyethylene); Neoprene and styrene-butadiene rubber (SBR) were coated with the adhesive W which had the following composition: 30.12 g Epon 828 and 0.95 g FX-512 photoinitiator (3.06 wt%). These laminates were

cured in the same manner as the preceding examples. Table IX provides the results of T-peel adhesion tests in Kg/linear cm conducted on Example Nos. 17-20 at room temperature and at 204° C after aging for 18 hours.

TABLE IX

T-Peel Data for Laminates Prepared on Various Rubber Substrates

| Ex. No. | Substrate | RT | 204°C 18H |
|---|---|---|---|
| 17 | EPDM | 1.3 | 2.1 |
| | | 0.5 | 1.6 |
| | | 0.4 | 0.4 |
| 18 | Hypalon | 0.07 | 0.1 |
| | | 0.07 | 0.07 |
| | | 0.07 | 0.07 |
| 19 | Neoprene | 0.2 | 1.4 |
| | | 0.2 | 0.4 |
| | | 0.2 | 0.2 |
| 20 | SBR | 0.3 | 2.1 |
| | | 0.2 | 1.6 |
| | | 0.2 | 1.3 |

Acceptable adhesion values to steel range from about 2.5 to 4.0 Kg/cm. It can be seen from Tables IV, VI and VIII that many of the Examples possessed values in this range while several exceeded it. For comparison, a thermally cured adhesive formulation comprising Epon 828 and 3 wt% $BF_3$, cured at 130° C for 5.5 hours was used to prepare an FEP laminate with a Bonderite 40 substrate. When subjected to the foregoing T-peel test at room temperature, a value of 4.5 Kg/cm was obtained. While adhesion was very good, the cure time and temperature were considerable. As to Table IX, the results show adhesion to non-metallic substrates was obtained by photocuring and that adhesion values were generally enhanced after heat aging.

Based upon the foregoing exemplification, it can be seen that the present invention provides novel polymer laminates as well as a process for bonding fluoropolymers to substrates in order to impart barrier protection. An important advantage of the process is that the laminate can be cured in the field as opposed to in the factory. Also, the process is not oxygen sensitive and therefore, no blanket of gas is required during any step. Moreover, the photocurable epoxy-based adhesive has essentially an indefinite pot life which affords the user all the time that is necessary to prepare the laminated product prior to curing. Lastly, due to the cure system employed, heat is not necessary and the cure is very rapid, both of which can provide economic advantages.

As noted hereinabove, the process of the present invention can also be practiced with hybrid photocurable adhesive compositions which provide epoxy functionality and unsaturated functionality, as may be desired or preferred for specific applications.

Inasmuch as a wide variety of epoxy-based photocurable adhesives as well as fluoropolymer films have been disclosed to prepare the laminates of this invention, we do not intend to limit our invention to the specific resins, photoinitiators or polymer films exemplified herein.

It is to be understood that the examples reported herein have been provided to present results obtainable by practice of the disclosed invention. Furthermore, the process of this invention is believed by us to be operable with other resins, photoinitiators and fluoropolymer films than those which have been

exemplified herein. Thus, it should be evident that the determination of particular components as well as the amounts thereof can be made without departing from the spirit of the invention herein disclosed and described, and that the scope of the invention shall include all modifications and variations that fall within the scope of the attached claims.

## Claims

1. A laminated product comprising: a substrate selected from the group consisting of metals, naturally occurring materials, glass, fiberglass, fiber reinforced plastics, non-reinforced plastics and elastomers; a fluoropolymer film wherein said fluoropolymer film is selected from the group consisting of homopolymers and copolymers of polyolefins that are at least partially fluorinated; and an epoxy based photocurable adhesive wherein the epoxy based photocurable adhesive consists essentially of an epoxy compound and wherein the epoxy based photocurable adhesive is bonded to said substrate and said fluoropolymer film.

2. The laminated product, as set forth in claim 1, wherein said fluoropolymer film provides a surface bonded to said photocurable adhesive, said surface being pretreated to enable bonding to occur.

3. The laminated product, as set forth in claim 1, wherein said surface is pretreated by etching.

4. The laminated product, as set forth in claim 1, wherein said substrate is metal, said fluoropolymer is fluorinated ethylene propylene and said photocurable adhesive is an epoxy resin.

5. The laminated product, as set forth in claim 1, wherein said substrate is fiber reinforced plastic, said fluoropolymer is fluorinated ethylene propylene and said photocurable adhesive is an epoxy resin.

6. The laminated product, as set forth in claim 1, wherein said epoxy based photocurable adhesive comprises a blend of materials selected from the group consisting of epoxy compounds and unsaturated free-radical polymerizable adhesives.

7. A process for bonding fluoropolymers to substrates wherein said substrate is selected from the group consisting of metals, naturally occurring materials, glass, fiberglass, fiber reinforced plastics, non-reinforced plastics and elastomers and wherein said process comprises the steps of: a) coating at least one surface of a substrate with a first layer comprising an epoxy based photocurable adhesive composition wherein said epoxy based photocurable adhesive consists essentially of an epoxy compound; b) imparting a surface treatment to a fluoropolymer film wherein said fluoropolymer film is selected from the group consisting of homopolymers and copolymers of polyolefins that are at least partially fluorinated and enabling said film to form a bond with said adhesive composition; c) applying said fluoropolymer film as a second layer over said first layer; and d) exposing said substrate and first and second layers to radiant energy wherein said radiant energy has a wavelength in the range from about 2,200 Angstroms to about 14,000 Angstroms and is sufficient to cure said adhesive composition and bond it to said substrate and said fluoropolymer film.

8. The process, as set forth in claim 7, wherein the thickness of said first layer ranges from about 2.5 microns to about 625 microns and wherein the thickness of said fluoropolymer film ranges from about 2.5 microns to about 625 microns.

9. The process, as set forth in claim 7, wherein said substrate is metal, said fluoropolymer is fluorinated ethylene propylene and said photocurable adhesive is an epoxy resin.

10. The process, as set forth in claim 7, wherein said substrate is fiber reinforced plastic, said fluoropolymer is fluorinated ethylene propylene and said photocurable adhesive is an epoxy resin.